# EUROPEAN PATENT APPLICATION

(11) **EP 0 951 832 A1**
(43) Date of publication of application: **27.10.1999**
(21) Application number: 98830247.7
(22) Date of filing: 24.04.1998
(51) Int. Cl.: A01N 63/00

(54) **New entomopathogenic nematodes active at low temperature**

(71) Applicant: BIO INTEGRATED TECHNOLOGY S.r.l., 06050 Todi (Perugia) (IT)
(72) Inventor: Ricci, Manuele, Sant'Angelo di Celle, 06050 Deruta (IT); Fridlender, Bertold, 96428 Jerusalem (IL)
(74) Representative: Gerbino, Angelo

(57) **Abstract**

The nematodes belong to a strain of the species *S. feltiae* whose components, when applied in the infectious stage at a density of 500,000/m² of agricultural soil where *O. sulcatus* larvae are present and which is kept at a constant temperature of 5°C, cause a mortality rate of the larvae of at least 50% after 14 days or at least 70% after a period of 28 days.

## Description

The present invention relates to the biological and/or integrated control of arthropods, in particular insect pests, using nematodes to protect crops, such as ornamental and nursery plants, from harmful insects especially *Otiorhynchus sulcatus* F. (Coleoptera, Curculionidae) and similar species.

No other strain of nematodes used until now has shown insecticidal capabilities in the cold, especially at temperatures lower than 8°C, which would thus allow their effective use in conditions similar to those of real crops at these temperatures.

For example, Gwynn R. L. (1994. Development of cold active nematodes for insect pest control. Ph.D. Thesis, Department of Agriculture, Reading University) has identified some strains of nematodes which are capable of killing *O. sulcatus* larvae at low temperatures, but only in artificial laboratory conditions, which are completely different from those of an actual crop needing protection from insect pests.

Mason J. M. and Hominick W. M. (1995. The effect of temperature on infection, development and reproduction of *Heterorhabditis*. J. of Helminthology. 69, 337-345) have studied the insecticidal activity of isolates of *Heterorhabditis*, especially *H. megidis* (UK), on *Galleria mellonella* larvae, obtaining an infection rate of only 10% at 5°C. Moreover, G. *mellonella*, is considerably more sensitive to the action of nematodes than *O. sulcatus*, which is the insect that needs to be controlled in real agricultural conditions.

Griffin C. T. and Downes M. J. (1991. Low temperature activity in *Heterorhabditis* sp. (Nematoda: Heterorhabditidae). Nematologica. 37, 83-91) have shown that the HF 85 species of the genus *Heterorhabditis* has some insecticidal action against G. *mellonella* and *Tenebrio molitor* at 7°C, but none whatsoever at 5°C. However, these observations were again made in artificial laboratory conditions, and thus differ from the actual conditions in the field.

Grewal P. S. *et al*. (1994. Thermal adaptation of entomopathogenic nematodes: niche breadth for infection, establishment and reproduction. J. therm. Biol. 19, 245-253) have shown that *Steinernema feltiae* nematodes act somewhat as an insecticide against *G*. *mellonella* at 8°C, but only in artificial laboratory conditions.

Westermann P. R. and Van Zeeland M. G. (1989. Comparison of *Heterorhabditis* isolates at low temperatures. Med. Fac. Landbouww. Riiksuniv. Gent 54:1115-1124) have shown the effectiveness of the Dutch isolate *Heterorhabditis* of the HF85 species against *O. sulcatus* at temperatures averaging between 8-10°C The results obtained can be due to the test temperatures that were relatively high.

Steiner W. A. (1995. Dispersal and host finding ability of entomopathogenic nematodes at low temperatures. Nematologica. 42: 243-261) has shown that *S.kraussei* nematodes found in the Alps infect 30% of the *O. sulcatus* larvae in pots of strawberries kept at 8°C for 10 or 20 days and then 20°C for another three or more days. It must be noted, however, that this author is referring to the degree of infection, which does not necessarily correspond to the mortality rate, and also that the low temperature treatment was followed by incubation at higher temperature.

The object of this invention is to provide the means for the biological and integrated pest control of insects pests at relatively low temperatures and in environmental conditions which are similar to the ones in which normal crops are produced.

This is achieved by using a new isolate of nematodes, insecticidal formulations which include these nematodes and methods for the use of these insecticidal formulations, which will are described in detail in the following claims.

This invention is based on the discovery of a new isolate of nematodes which was isolated in Val d'Aosta (Italy) at about 2,000 m above sea level. A representative specimen of this isolate has been deposited at the Belgian Coordinated Collections of Microorganisms (BCCM) and is listed under deposit number LMBP1665CB.

The nematodes of the new isolate belong to the species *S*. *feltiae*. It was shown that they mate and generate progeny which are themselves inter-fertile with specimens from other strains of *S. feltiae*, such as the UK strain. Progeny are not generated, however, by their mating with *S. kraussei* specimens.

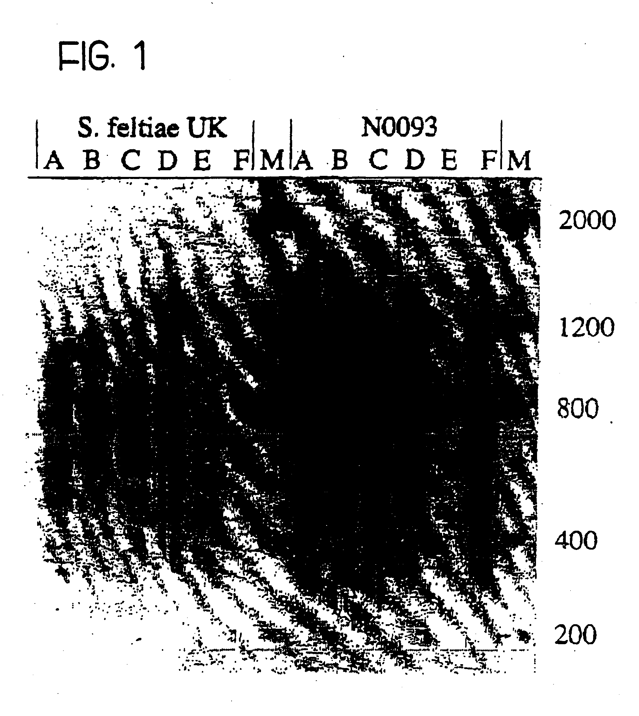

Figure 1 shows the results of a genetic analysis done on the nematodes of this invention, called N0093, in comparison with known nematodes such as *S. feltiae* UK. The result is definitely different for the two types of nematodes, and can thus be used to characterize those of the present invention.

This analysis was done according to the method of Mueller, U. G., Lipari, S. E. and Milgroom, M. G. (1996). Amplified fragment length polymorphism (AFLP) fingerprinting of the symbiotic fungi cultured by the fungus-growing ant. *Cyphomyrmex minutus*. Molecular ecology. 5, 119-122 by Dr. Alex Reid of Cabi Bioscience, a department of CAB INTERNATIONAL, UK Centre, St. Albans.

This method of analysis basically consists of the amplification of fragments of nematode DNA using certain primers and obtaining an image on gel of the primer together with the associated DNA fragments.

In this specific case, six different primers were used whose images are marked with the letters A-F in Figure 1, wherein a numerical scale relative to the molecular weights is included on the right.

The structure of the primers (A-F) is as follows:
- A: 5'GACTGCGTACATGCAGGT3'
- B: 5'GACTGCGTACATGCAGGA3'
- C: 5'GACTGCGTACATGCAGGC3 '
- D: 5'GACTGCGTACATGCAGAC3'
- E: 5'GACTGCGTACATGCAGAG3'
- F: 5'GACTGCGTACATGCAGCG3'

The nematodes of this invention also show greater motility at lower temperatures compared with the known *S. feltiae* UK nematodes.

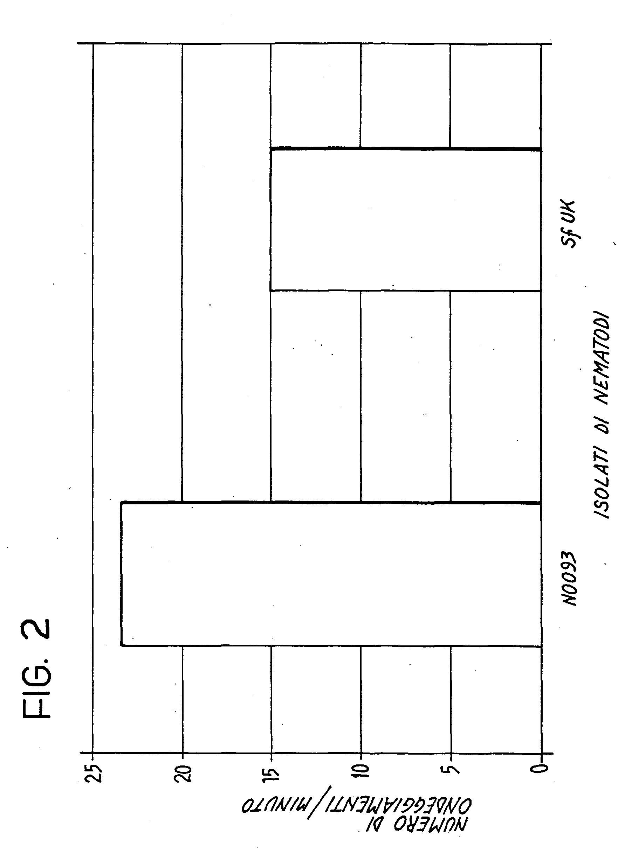

A quantitative measurement of this motility can be determined by the number of wavings made by the nematodes at a given temperature as observed under a microscope, as it appears from Figure 2 which shows the number of wavings per minute at 5°C both by the nematodes of this invention and the known nematodes.

The insecticidal activity of the nematodes of the invention is linked to the presence of symbiotic bacteria which live in their intestine, such as in the above-mentioned nematodes deposited at the BCCM. These bacteria are released inside the insect infected with the nematode, and kill it. The nematode then feeds on the decaying insect and on the developing bacteria, completing its own development, attaining sexual maturity and mating, thus generating other nematodes that will then go through the successive stages of development (J1, J2, J3, J4 and adult). If food is lacking, the nematode in stage J2 will not enter the J3 stage, but will go into stage DJ, which represents the infectious stage, exiting from the dead insect, wherein it was originally, and disperses on the soil in order to look for food and, therefore, to parasitize other insects.

The nematodes which belong to the new strain along with their symbiotic bacteria, are the active ingredient in the insecticidal formulations which can be formulated in clay, granules, inert carriers in general or any other suitable form.

These insecticidal formulations are also effective in the cold, especially at temperatures below 8°C and down to at least 3°C, against insect pests such as Coleoptera, in particular belonging to the *O. sulcatus* species, in actual field conditions.

With the insecticidal formulations of the invention, it is possible to treat crops in late autumn, early spring and even during winter when the insects are still active.

The insecticidal formulations of the invention are applied to crops at a density of nematodes/m² preferably between 125,000 and 1,000,000. As a result of this application, an appreciable drop in the percentage of insects is thus obtained within about ten days from the treatment.

Further advantages and characteristics of this invention are evident in, but not limited to, the following examples of application, illustrated in the enclosed figures, in which:
Figure 1 (already described) is a diagram which shows the results of the genetic analysis done by Dr. Alex Reid on diverse nematodes;
Figure 2 (already described) is a diagram which shows the number of wavings per minute of various nematodes;
Figure 3 is a diagram which shows the mortality rate of *O. sulcatus* larvae according to the insecticide treatment parameters, such as the type of the nematodes used, temperature and length of incubation;
Figure 4 is a diagram which shows the mortality rate of *O. sulcatus* larvae according to the density of nematodes with which they came into contact;
Figure 5 is a diagram which shows the mortality rate of *O. sulcatus* larvae according to their size and the type of nematode with which they came into contact;
Figure 6 is a diagram which shows the mortality rate of *O. sulcatus* larvae according to the length of time they are exposed to the nematodes of the invention;
Figure 7 is a diagram which shows the number of nematodes present in an insect as function of exposure time;
Figure 8 is a diagram which shows the mortality rate of *Balaninus elephas* larvae according to the type of nematode with which they came into contact;
Figure 9 is a diagram which shows the outside temperature variations over time in the course of the experiment in example 6;
Figure 10 is a pie-chart which shows the percentage of the distribution of the various temperatures of the diagram in the preceding figure;
Figure 11 is a diagram which shows the mortality rate of *O. sulcatus* larvae according to the type of nematodes with which they were exposed;
Figure 12 is a table which shows the *in vivo* production data of the diverse nematodes at different temperatures; and
Figure 13 is a diagram which shows the mortality rate of *O. sulcatus* larvae according to the type of nematode with which they were exposed.

### EXAMPLE 1

A series of pots (13 cm in diameter and 10 cm in height), each containing non-sterile peat with a pH of 6, were prepared. Plants of the *genus Impatiens* were planted in them together with 10 larvae of the coleopteran *O. sulcatus*. The larvae were placed on top of the peat, the surface of which was scratched in order to facilitate their penetration into the soil. 6,400 nematodes of the invention in the infectious, or DJ, stage - called N0093 - and dispersed in 20 ml of water corresponding to a density of 500,000 nematodes/m² of soil, were then introduced into each pot of the first group. An equal number of the *S. feltiae* UK nematodes were dispersed in 20 ml of water and introduced into each pot of the second group. Into a third group of pots, which acted as a control, only 20 ml of water were introduced.

This type of system reproduces well the actual culture conditions, especially considering that peat contains fertilizers and other organisms which could kill the nematodes, such as fungi, bacteria and insects (e.g. Collembola). The presence of a root system that releases carbon dioxide is also capable of disorienting the nematodes.

During the tests, the pots were kept at a constant temperature (specifically at 20°C, 12°C and 5°C). The percentage of larvae killed (mortality) was measured after 7, 14 and 28 days of being exposed (DAT, or days after treatment) to the insecticide composed of water and nematodes.

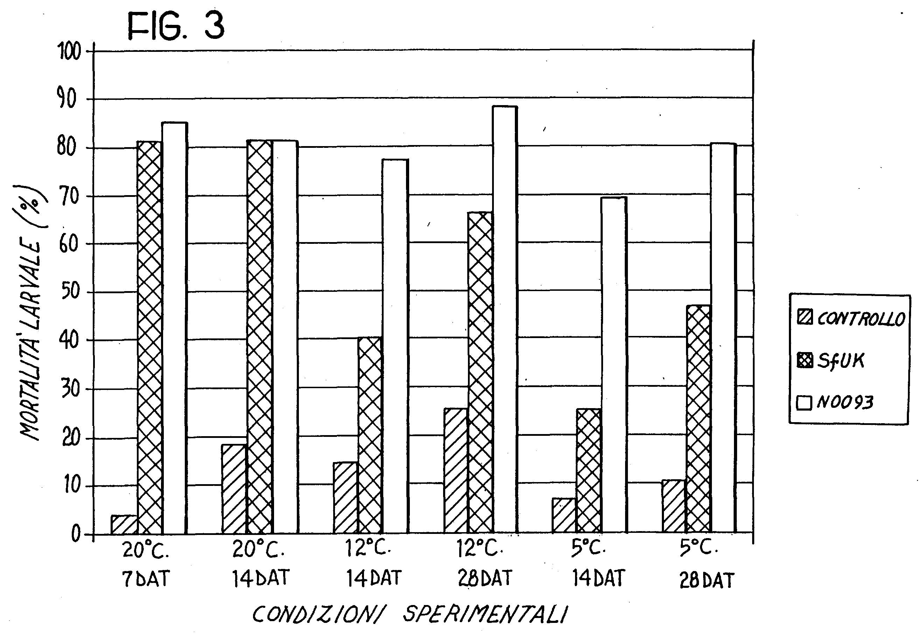

From the mortality data (shown in figure 3) it was determined that the nematodes of the invention have an insecticidal effectiveness equal to that of the known nematodes at 20°C, and their effectiveness increases as the temperature decreases.

### EXAMPLE 2

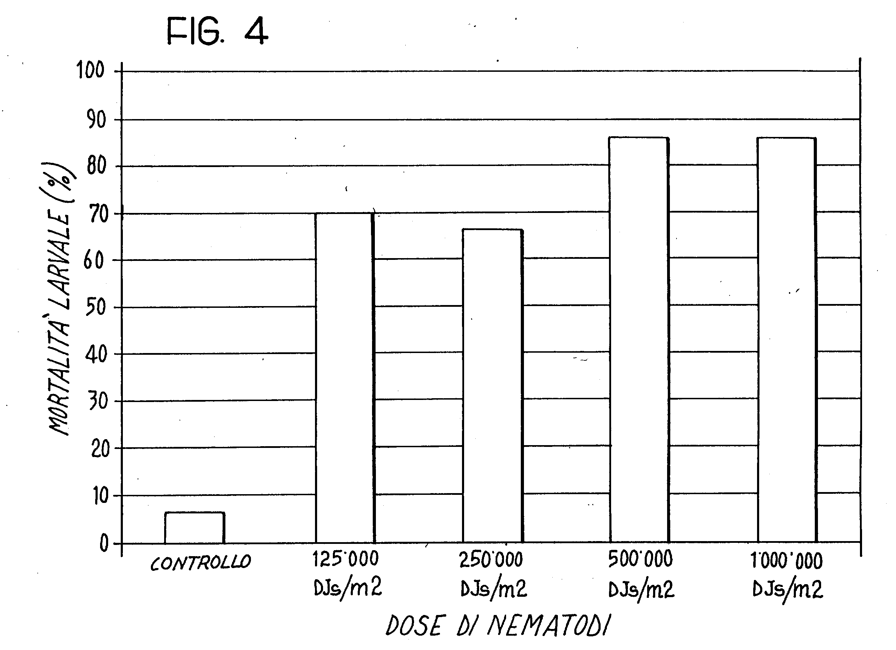

This test was done using the same procedure as described in Example 1 but at a temperature of 5°C. More groups of pots were used, with the nematode of the invention being applied at a density varying between 125,000 and 1,000,000 per m² of soil. As can be seen from the data in Figure 4, reducing the usual density (which is 500,000 nematodes/m²) to one-fourth did not appreciably change the mortality rate of the larvae, when measured 21 days after the treatment.

### EXAMPLE 3

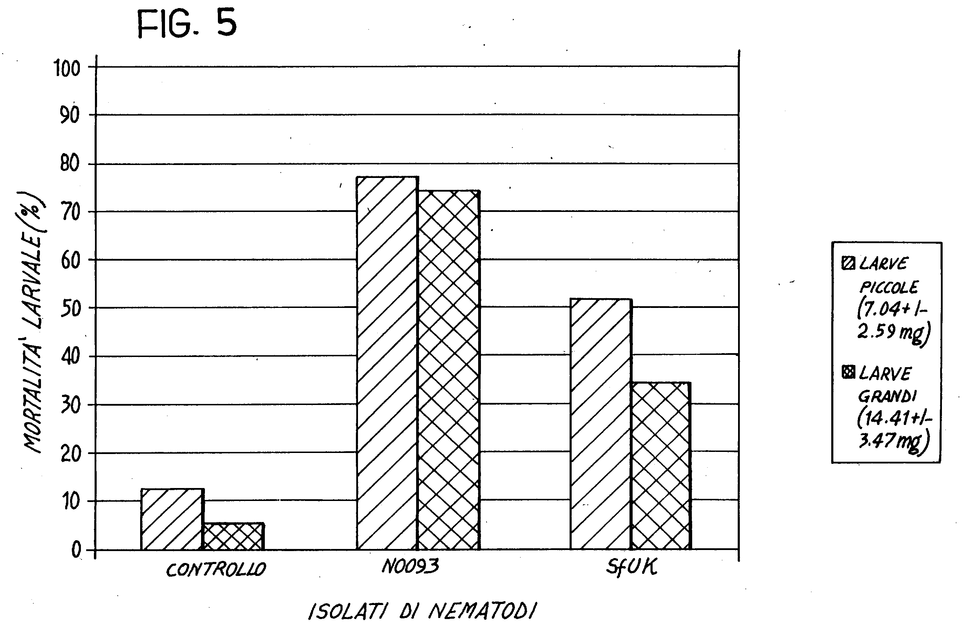

This was done at a temperature of 5°C using the same procedure as described in Example 1 and varying the size of the *O. sulcatus* larvae utilized. As can be seen from the mortality data measured after 21 days (shown in Figure 5), the nematodes of the invention attack in the same manner both large and small larvae, while the known nematodes show a preference for small larvae.

### EXAMPLE 4

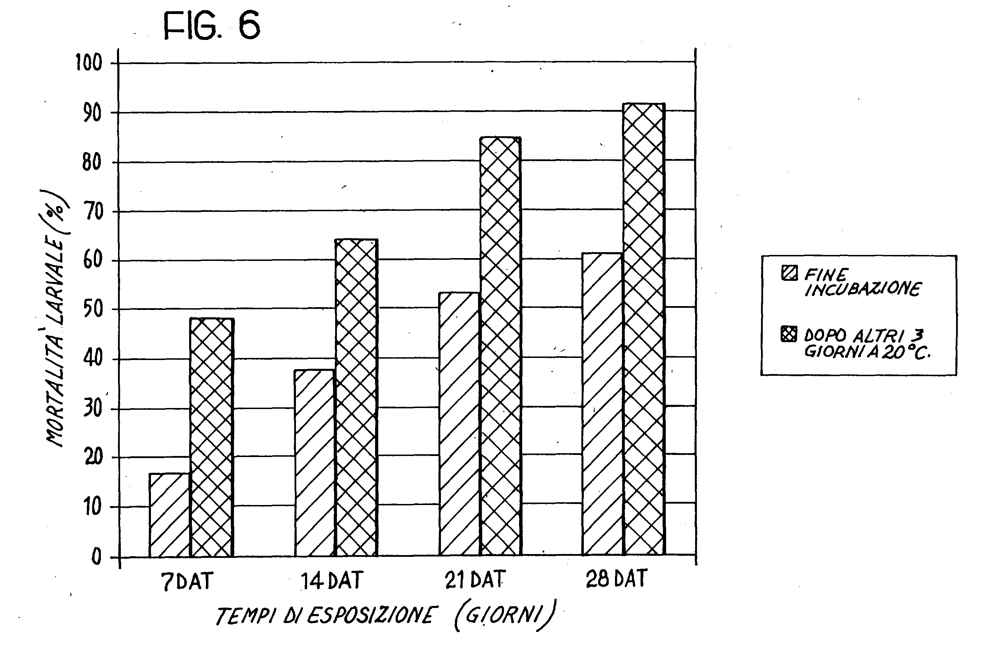

This test was done using the same procedure as described in Example 1 at a temperature of 3°C, measuring the larval mortality rate in different pots at 7, 14, 21 and 28 days after treatment with the nematodes of the invention. After this measurement, the temperature of the pots was raised to 20°C for three additional days, after which the larval mortality was remeasured. The larval mortality data can be seen in figure 6, which shows the insecticidal effectiveness of the nematodes of the invention even at temperatures as low as 3°C. The increase in mortality after the three days at the higher temperature of 20°C shows that some nematodes which penetrated the insect at 3°C did not have enough time at such a low temperature to carry out the processes necessary to kill the insect.

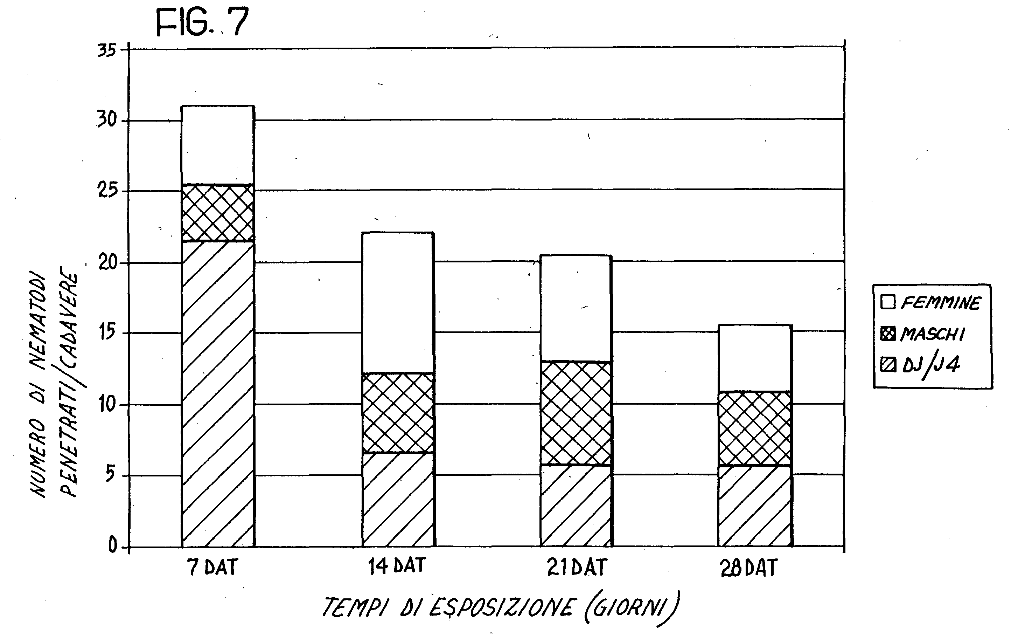

Figure 7 shows the number of nematodes which had entered the dead larvae according to the different DATs and divides them into male, female and DJ and J4. As can be seen from the figure, this number decreases with the increasing of the DAT, showing that the first nematodes after having penetrated the larvae inhibited the entrance of others.

### EXAMPLE 5

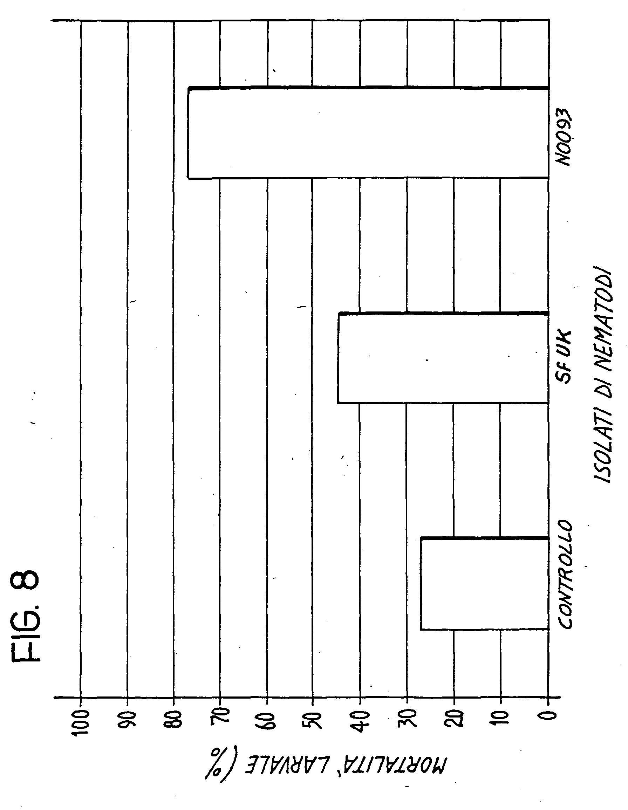

This test was done using the same procedure as described in Example 1 at a temperature of 8°C, utilizing the larvae of the coleopteran *Balaninus elephas* instead of *O. sulcatus* and soil from a chestnut grove for filling the pots. The data taken at 21 DAT and given in Figure 8 show the nematodes of the invention to be more effective compared to the known nematodes.

### EXAMPLE 6

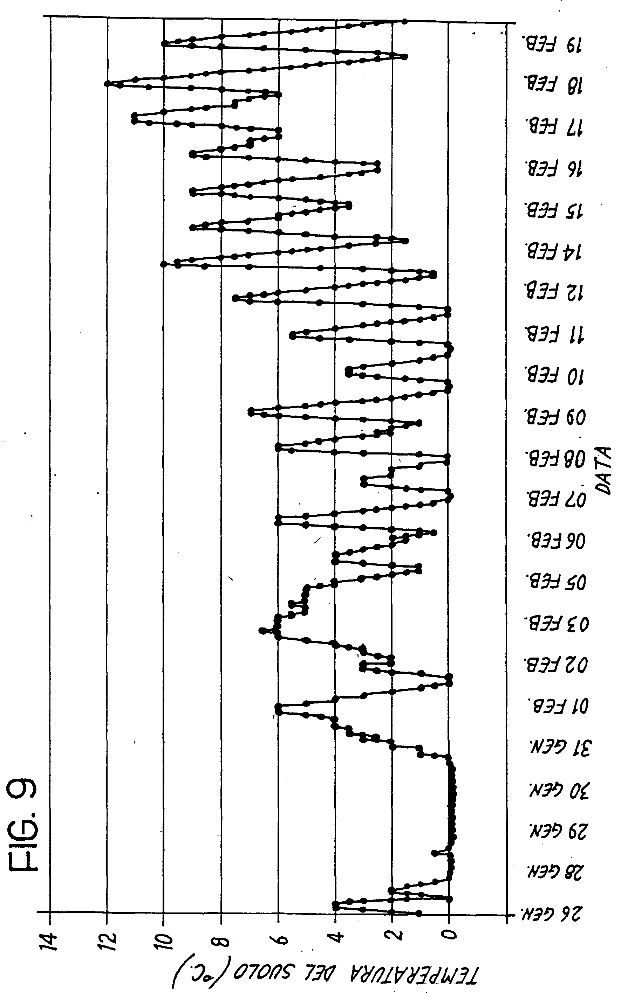

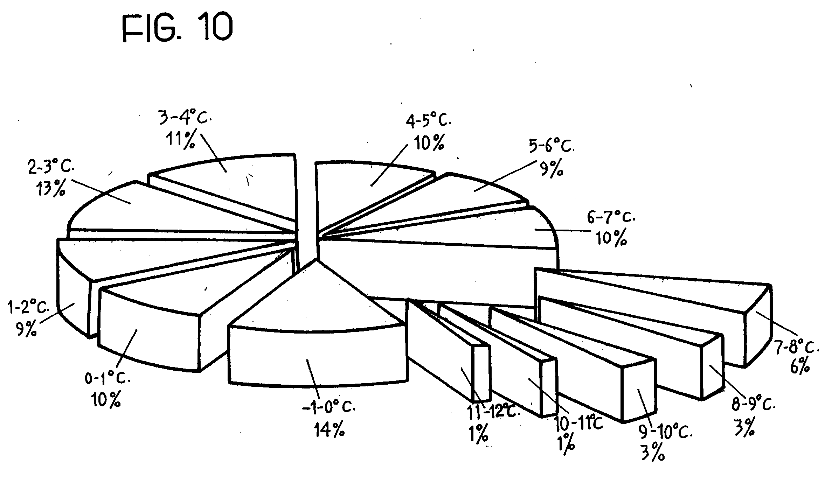

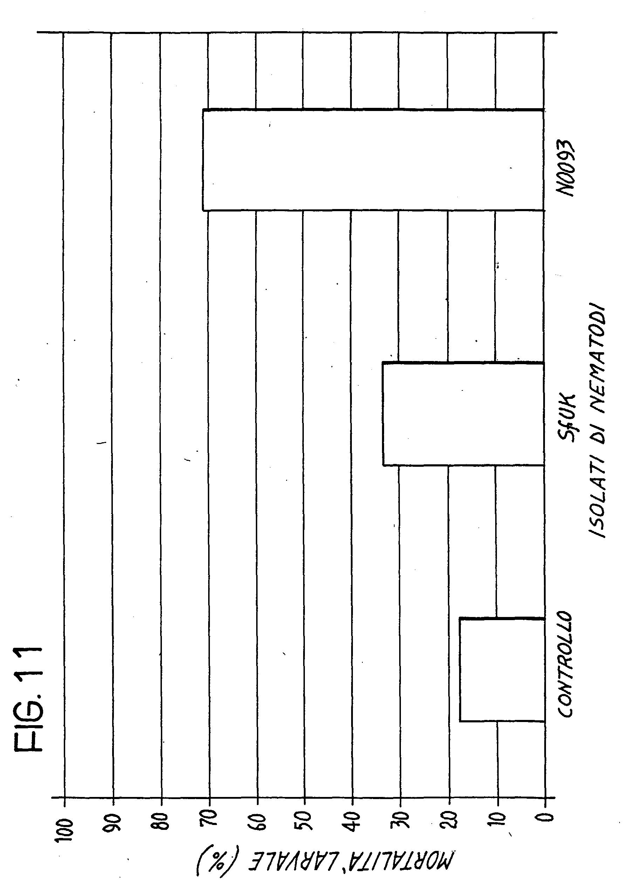

Three-liter pots were planted with strawberry plants and 10 *O. sulcatus* larvae were placed in each pot. They were kept outside for 24 days, from 26 January to 20 February 1998. In the first group of pots, N0093 nematodes of the invention in the DJ stage were introduced at a density of 500,000 nematodes/m² of soil. Into the pots of a second group, known *S. feltiae* UK nematodes were introduced at the same density. No nematodes were introduced into the pots of a third group, which acted as the control. Figures 9 and 10 show the variations in temperature (the average value of which was 3.5°C +/- 2.9°C) during the trial. It can be seen from the data of larval mortality measured at the end of 24 days, as shown in Figure 11, that the nematodes of the invention were again more effective as an insecticide than the known nematodes.

### EXAMPLE 7

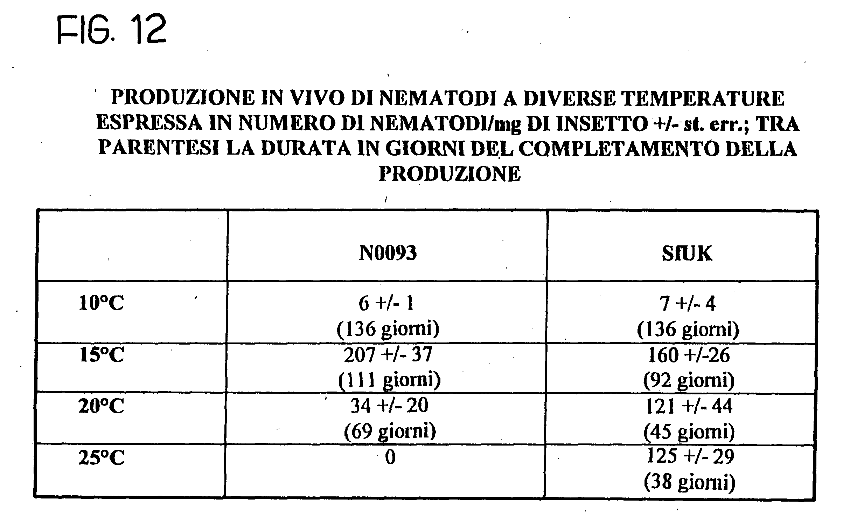

The reproductive capacity of the nematodes of the invention in comparison with that of known nematodes was tested, using conventional *in vivo* techniques. These techniques call for placing the nematodes in contact with insect larvae such as G. *mellonella*. Figure 12 shows the results of trials run at various constant temperatures, from which it is seen that up to about 15°C the reproductive capacity of the nematodes of the invention (expressed as the number of nematodes per mg of insect at the end of the trial) is as high as that obtained for known nematodes.

### EXAMPLE 8

The reproductive capacity of the nematodes of the invention was tested, comparing them to known nematodes, using in liquid production techniques more economic and advanced than those used in the previous example.

In this example, 80 ml of nutrient medium were introduced in 500 ml Erlenmeyer flasks in which, after having been previously isolated and stored, a pure culture of symbiotic bacteria of the nematode was developed. Nematodes in the infectious stage DJ were then introduced into the Erlenmeyer flasks, where they began to reproduce. After 12 days, during which the flasks were kept at ambient temperature, 120,000 of the N0093 nematodes of the invention were counted per ml of the nutritive media as opposed to 110,000 nematodes of the known *S. feltiae* UK nematodes per ml of nutritive media.

### EXAMPLE 9

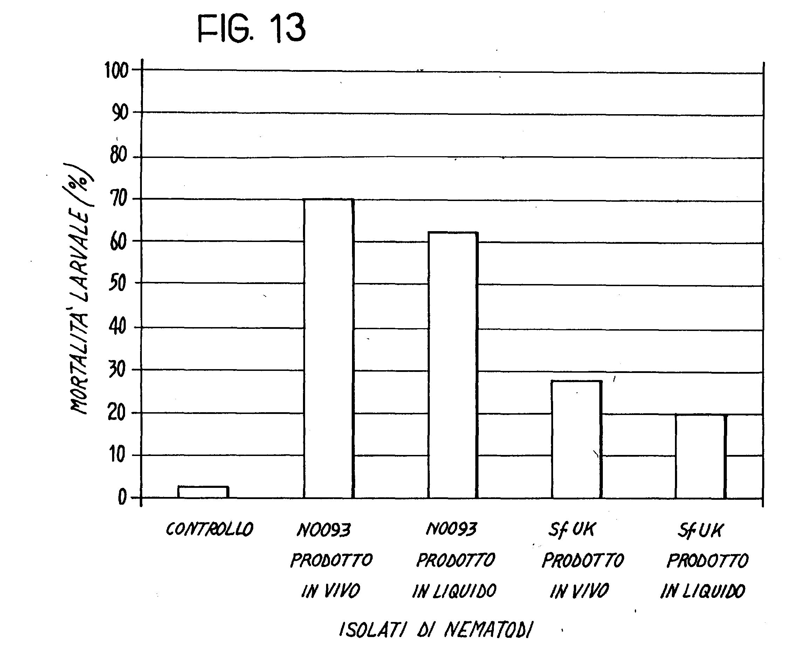

This test was carried out using the same procedure as described in Example 1 at a temperature of 5°C, in order to compare the insecticidal activity of the nematodes of the invention in relation to the production techniques either *in vivo* or in liquid, as illustrated in the two previous examples. As can be seen from the mortality data measured at 21 DAT and shown in Figure 13, the insecticidal activity of the nematodes of the invention was not only superior to that of the known nematodes, but was also very little influenced by the procedure used for their production.

Naturally, the principle of the invention remaining the same, the specific features and the embodiments may vary widely from those described purely by way of example, without departing thereby from the scope of the invention.

## Claims

1. Nematode belonging to a strain whose components, when introduced in the infectious stage at a density of 500,000/m² of agricultural soil where *O. sulcatus* larvae are present and where the temperature is kept at a constant of 5°C, cause a mortality rate of said larvae of at least 50% after 14 days or at least 70% after 28 days.

2. Nematode according to claim 1, belonging to a strain whose components, when introduced in the infectious stage at a density of 500,000/m² of agricultural soil and where *O*. *sulcatus* larvae are present and where the temperature is kept constant at 3°C, cause a mortality rate of said larvae of at least 60% after 28 days.

3. Nematode according to any of the preceding claims, belonging to the *S. feltiae* species.

4. Nematode according to any of the preceding claims, acting as a host to at least one symbiotic bacterium.

5. Nematode according to any of the preceding claims, having the deposit number LMBP1665CB at the Belgian Coordinated Collections of Microorganisms (BCCM).

6. Insecticidal formulation for biological and/or integrated control of arthropods, in particular insect pests, which include nematodes according to any of the preceding claims.

7. Insecticidal formulation according to claim 6, including a carrier which is inert with regard to the nematodes.

8. Method for biological and/or integrated control of arthropods, in particular insect pests, including the placing of nematodes or insecticidal formulations according to any of the preceding claims in contact with said insects.

9. Method according to claim 8, wherein said insects are Coleoptera, especially those belonging to the species *O*. *sulcatus.*

10. Method according to claim 8 or 9, wherein the insecticidal formulation is put into contact with said insects at a temperature lower than 20°C, and in particular lower than 10°C.

11. Method according to claim 10, werein the insecticidal formulation is put into contact with said insects at a temperature between 3°C and 8°C.

12. Method according to any one of claims 8 to 11, wherein said insecticidal formulation is applied to a surface so as to obtain a density of between 125,000 and 1,000,000 nematodes/m².
